Europäisches Patentamt

European Patent Office

Office européen des brevets

(11) Publication number: **0 237 101**
**A2**

# EUROPEAN PATENT APPLICATION

(21) Application number: **87200305.8**

(22) Date of filing: **23.02.87**

(51) Int. Cl.4: **B01J 39/04** , D06P 3/76

(30) Priority: **07.03.86 IT 1966986**

(43) Date of publication of application:
**16.09.87 Bulletin 87/38**

(84) Designated Contracting States:
**AT BE CH DE ES FR GB GR LI LU NL SE**

(71) Applicant: **ENICHEM FIBRE S.p.A.**
**Via Ruggiero Settimo 55**
**I-90139 Palermo(IT)**

(72) Inventor: **Cognigni, Franco**
**Via Cupello 3/A**
**I-20097 San Donato Milanese Milan(IT)**
Inventor: **Sciolla, Ettore**
**Vicolo Garibaldi 1 Fordongianus**
**I-09025 Oristano(IT)**

(74) Representative: **Roggero, Sergio et al**
**Ing. Barzanò & Zanardo Milano S.p.A. Via**
**Borgonuovo 10**
**I-20121 Milano(IT)**

(54) **Method for treating liquid effluents deriving from the in-line dyeing of acrylic fibres.**

(57) In the preparation of acrylic fibres by the wet-spinning process in which a solution of acrylonitrile polymer in an organic solvent is extruded into a coagulum bath and the coagulated acrylic fibre is subjected to stretching and in-line dyeing in dyeing baths containing an aqueous solution of one or more cationic dyestuffs, the liquid effluents containing said dyestuffs are treated by contact with acidic ion exchange resins.

EP 0 237 101 A2

# METHOD FOR TREATING LIQUID EFFLUENTS DERIVING FROM THE IN-LINE DYEING OF ACRYLIC FIBRES

This invention relates to a method for treating liquid effluents deriving from the in-line dyeing of acrylic fibres.

It is known in the art to prepare in-line dyed acrylic fibres by the wet-spinning process in which a solution of an acrylonitrile polymer in an organic solvent is extruded into a coagulum bath and the coagulated fibre is subjected to stretching and dyeing, this latter treatment being conducted, with a short residence time, in dyeing baths containing a solution of one or more cationic dyestuffs.

During this treatment, considerable quantities of liquid effluent form, deriving mainly from the fibre wash for removing non-fixed dyestuff after the dyeing step, from the emptying of the dyeing baths when changing colour tone, and from the washing of the dyeing and dyestuff metering equipment.

All these liquid effluents contain the dyestuff, consisting of an organic compound the concentration of which can vary widely according to the spinning process used and according to that of its aforesaid origins in the actual process.

For example, in an in-line acrylic fibre dyeing process, dyestuff concentrations vary from about 1 to 100 mg/m$^3$ in the fibre wash effluent and range up to about 40 g/l in the dyestuff bath emptying effluent.

Because of high dyestuff toxicity, the effluents originating from the dyeing process cannot be discharged into biological treatment tanks or, even worse, directly into rivers or seas.

On the other hand, the nature of dyestuffs prevents their adequate oxidation prior to any biological treatment.

Consequently the purification of such effluents necessarily requires total absorption or abatement of the dyestuffs contained in the aqueous vehicle.

In the known art, two main methods are used for this purpose, namely flocculation and absorption on activated carbon.

Flocculation is based on modification of the interfacial dyestuff dispersion/solution tension, with consequent dyestuff precipitation and elimination in the form of sludge and the release of practically colourless effluent.

However this treatment, which is implemented by adding suitable polyelectrolytes to the solutions to be treated, is not always exhaustive and in any event produces large quantities of sludge which is difficult to filter and disperse.

On the other hand, decoloration with activated carbon, the efficiency of which is limited to dilute dyestuff solutions, can give rise to undesirable dyestuff release phenomena on variation of the treatment conditions such as water temperature, water hardness and the possible presence of impurities.

The object of the present invention is a method for treating liquid effluents deriving from the in-line dyeing of acrylic fibres, which obviates the aforesaid drawbacks of the known art. More particularly, according to the present invention acrylic fibres are prepared by the wet-spinning process in which a solution of an acrylonitrile polymer in an organic solvent is extruded into a coagulum bath and the coagulated fibre is subjected to stretching and in-line dyeing in a dyeing bath containing an aqueous solution of one or more cationic dyestuffs, the method being characterised in that the liquid effluents containing said dyestuff are decolorised by contact with acidic ion exchange resins.

Acidic ion exchange resins suitable for the purpose are resins carrying free or salified sulphonic acid groups, or free or salified carboxylic acid groups, bonded to a solid, insoluble polymeric matrix.

Specifically, in the wet-spinning process of the present invention, a solution of an acrylonitrile polymer in an organic solvent (spinning dope) is firstly prepared.

Polymers suitable for the purpose are normally acrylonitrile copolymers containing between 5 and 10% by weight of a comonomer such as methyl acrylate, methyl methacrylate or vinyl acetate, having a mean viscometric molecular weight of the order of 100,000-150,000.

Solvents suitable for the purpose are generally chosen from dimethylformamide, dimethylacetamide and dimethylsulphoxide.

The spinning dope obtained in this manner is extruded through the holes of a spinneret into a coagulum bath which does not dissolve the polymer but is able to extract the solvent from the spinning dope when this emerges from the spinneret holes. Generally, said coagulum baths consist of aqueous solutions of the actual organic solvent used in preparing the spinning dope.

The coagulated fibre is then subjected to the normal stretching in an axial direction, and the stretched fibre obtained in this manner, generally in the form of a tow, is passed through a dyeing bath.

The dyeing step can be preceded by a retraction step, or alternatively the dyeing step can be conducted before stretching the fibre.

In all cases, the in-line dyeing comprises passing the fibre through a dyeing bath containing a cationic dyestuff or a mixture of cationic dyestuffs, in the form of an aqueous solution with a concentration which can reach about 40 g/l.

These dyestuffs can for example be of azomethinic or azo type or of the triphenylmethane class.

Specific examples of dyestuffs are those known commercially as C.I. Basic Yellow, C.I. Basic Violet, C.I. Basic Red, C.I. Basic Blue and C.I. Basic Orange.

After dyeing, the fibres are wrung and treated thermally with saturated steam to complete dyestuff fixing. The usual operations then follow, comprising washing to remove non-fixed dyestuff, lubrication with a solution of non-ionogenic products, drying and crimping.

During the aforesaid spinning process, liquid effluents form during the fibre wash, after the dyeing step and during the emptying of the dyeing baths, in addition to those deriving from the washing of the fibre dyeing and dyestuff metering equipment. These liquid effluents, which can contain the cationic dyestuff up to a concentration of the order of 40 g/l, are treated according to the present invention with an acidic ion exchange resin. Specifically, ion exchange resins suitable for the purpose are those containing free or salified sulphonic acid or carboxylic acid groups bonded to a solid polymeric matrix insoluble in the effluent to be treated, and normally consisting of a styrene polymer in particular cross-linked with divinylbenzene, or an acrylic polymer.

Examples of commercial ion exchange resins suitable for this purpose are Amberlites and Duolites.

According to the present invention, decoloration is carried out continuously by passing the liquid effluents through a column containing the ion exchange resins in the form of granules in a fixed bed. The contact time and transfer rate of the liquid effluent through the resin bed vary according to the dyestuff concentration and column dimensions. Indicatively, in the case of liquid effluent containing 0.1-0.5 g/l of dyestuff a contact time of 20-40 seconds is sufficient, with a linear liquid transfer rate through the column of the order of 5-10 m/hour. In general the contact time can vary from 6 to 90 seconds and the linear transfer rate from 2 to 30 m/hour.

The treatment can be conducted at a temperature varying from ambient (15-25°C) to about 50°C.

In practice, for greater reliability it is convenient to use two liquid effluent treatment columns connected in series.

The experimental examples given hereinafter illustrate the present invention but are not meant to limit its scope.

EXAMPLE 1

A dyed acrylic fibre is prepared in an industrial spinning line with hourly fibre production of 800 kg at a final rate of 50 m/minute.

More specifically, a copolymer containing 92% by weight of acrylonitrile and 8% by weight of vinyl acetate dissolved in dimethylacetamide is extruded into a coagulum bath consisting of aqueous dimethylacetamide, and the fibre obtained in this manner is gathered into a tow which is subjected to stretching, retraction, washing and dyeing treatment. Specifically, the dyeing bath contains 25 g/l of a mixture of the following dyestuffs: C.I. Basic Yellow 28 (42% by weight), C.I. Basic Red 49 (14% by weight) and C.I. Basic Blue 41 (41% by weight).

The dyed fibre is wrung, treated thermally with saturated steam and washed to remove non-fixed dyestuff, lubricated, crimped and collected.

During the aforesaid process liquid effluents are produced containing a total of 300 g/m$^3$ of the mixture of the three aforesaid dyestuffs.

These liquid effluents are fed by a centrifugal pump at a rate of 3 m$^3$/hour through a treatment plant comprising two columns connected in series and each containing 500 kg of the acidic ion exchange resin known commercially as Amberlite 252 of the Rohm and Hass Company.

This is a solid ion exchange resin in the form of granules having a size of the order of 0.5 mm and carrying sulphonic acid groups salified with sodium on a polystyrene matrix cross-linked with divinylbenzene, its exchange capacity being 2 meq/ml.

Both columns have an inner diameter of 800 mm and a height of 2000 mm, and are filled with resin to the extent of 50%.

The liquid effluent is fed to the top of the first column and emerges completely decolorised from the base of the second column, when operating at an effluent temperature of 30-40°C, a contact time of about 20 seconds and a linear liquid rate through the column of about 6 metres/hour.

The yield with respect to the ion exchange resin is about 120%, which means that 100 parts by weight of resin absorb 120 parts by weight of commercial liquid dyestuff.

## EXAMPLE 2

The procedure of Example 1 is followed but with countercurrent flow, by feeding the liquid effluent to the base of the first column and recovering the purified effluent from the top of the second column.

Again in this case decoloration is complete.

## EXAMPLE 3

The procedure of Example 1 is followed, but feeding the following streams for treatment:
-a stream of 2.5 $m^3$/hour of liquid effluent containing 100 $g/m^3$ of dyestuffs originating from the wash section; and
-a stream of 0.1 $m^3$/hour of liquid effluent containing 10 g/l of dyestuffs originating from the dyeing bath emptying.

The outlet stream from the columns is visibly colourless.

Colorimetric analysis shows a dyestuff concentration of less than 1 ppm.

## Claims

1. A method for preparing acrylic fibres by wet-spinning in which a solution of the acrylonitrile polymer in an organic solvent is extruded into a coagulum bath and the coagulated fibre is subjected to stretching and to in-line dyeing in a dyeing bath containing an aqueous solution of one or more cationic dyestuffs, the method being characterised in that the liquid effluents containing said dyestuff are decolorised by contact with solid acidic ion exchange resins.

2. A method as claimed in claim 1, characterised in that said acidic ion exchange resins are solid resins carrying free or salified sulphonic acid groups or free or salified carboxylic acids groups bonded to a solid, insoluble polymeric matrix.

3. A method as claimed in claim 2, characterised in that said acidic ion exchange resin matrix is a styrene polymer, in particular cross-linked with divinylbenzene, or an acrylic polymer.

4. A method as claimed in claim 1, characterised in that said liquid effluents contain the cationic dyestuff at a concentration of up to 40 g/l and are brought into continuous contact with the solid acidic ion exchange resin in the form of a fixed bed, operating with a contact time of between 6 and 90 seconds, a linear liquid rate of between 2 and 30 m/hour and a temperature in the range of ambient (15-25°C) to about 50°C.